# EUROPEAN PATENT SPECIFICATION

(11) **EP 4 334 171 B1**
(45) Date of publication and mention of the grant of the patent: **11.06.2025**
(21) Application number: 22730309.6
(22) Date of filing: 19.04.2022
(51) Int. Cl.: B60P 3/035, B65H 49/32, B65H 75/42, H02G 1/06

(54) **A DEVICE FOR SUPPORTING AND OPERATING A CABLE DRUM AND A SERVICE TRAILER COMPRISING SAID DEVICE**
VORRICHTUNG ZUM TRAGEN UND BETREIBEN EINER KABELTROMMEL UND DIENSTANHÄNGER MIT DIESER VORRICHTUNG
DISPOSITIF DE SUPPORT ET DE FONCTIONNEMENT D'UN ENROULEUR DE CÂBLE ET REMORQUE DE SERVICE COMPRENANT LEDIT DISPOSITIF

(30) Priority: 06.05.2021 PL 43778921
(43) Date of publication of application: 13.03.2024
(73) Proprietor: Wardega, Tomasz, 05-075 Warsaw (PL)
(72) Inventor: Wardega, Tomasz, 05-075 Warsaw (PL)
(74) Representative: Kondrat, Mariusz
(86) International application number: PCT/IB2022/053639
(87) International publication number: WO 2022/234373

(56) References cited:
- GB-A- 2 265 355
- GB-A- 2 265 355
- US-A- 4 588 142
- US-A- 4 588 142
- US-A- 5 895 197
- US-A- 5 895 197

## Description

The subject-matter of the invention is a device for supporting and operating a cable drum, and a service trailer comprising said device.

The construction of infrastructure along with the installation of fibre-optic networks requires the use of appropriate precision devices and support equipment. Specialised equipment must be packed, secured, and transported to the installation/assembly sites where it is set up, arranged and connected.

From the Polish application description PL4198561 A1**,** a pilot rope unwinder is known, made of a steel frame consisting of four removable parts in the form of two supports and two beams; a tubular steel axis for the operating drum, on one end with a hole for bolting the bearing on, and on the other with a shank enabling possible connection of a drive; steel flange with bolts with a spacing matching the working drums and a centring hole matching the tubular axis; two ball bearings placed in a clamping bracket, bolted together.

From the Polish patent specification PL233144 B1**,** a service vehicle with a two-axle chassis and a box placed on it is known, wherein the said chassis is equipped with at least some of permanently fixed or detachably connected to it, or freely placed on it subassemblies and elements, which are: ultra-light service poles, reusable service cable (preferably wound on a drum) and a junction box, a steel formed cover, hooks, pass-through clamps, grounding probes, grounding cables and electrical sockets, battery or power generator, at least one guide being a guide with brushes, a drum under which there is a winder mechanism, as well as small accessories. The aforementioned small accessories include: guy ropes, rollers, tools, lighting mast, service Kevlar guy, electrical sockets, as well as guides built into the box to run the service cable on them. The winding mechanism is electrically driven and the winder is usually controlled by a wireless remote control, is suitably powered by a power generator or a battery and is preferably provided with a self-cleaning device for removing dirt from the cable arisen during winding of the cable on the reel.

From a UK application description GB2224092 A a device is known for delivering an elongated element (e.g., a cable) consisting of a bracket, a frame mounted on the bracket and two rollers mounted on the frame and arranged in a V-shape to support and guide the element during delivery. The frame includes a lower part and an upper part (preferably telescopic) on which rollers are mounted and which is adjustable (preferably by an adjustment screw) relative to the lower part. Preferably, the device is provided with stops for locking the parts in a relatively adjusted position. Furthermore, in a preferable embodiment, the disclosed device is constructed as a trailer having a chassis and jacks positioned on the chassis for securing the chassis at a desired location.

From the US application description US2014086688 A1 a cable trailer is known, used for supporting a cable reel weighing up to 10 tons and for laying the cable in a trench or along a trench. The trailer consists of a trailer chassis provided with an inner opening and enclosed by a tailgate that can be opened or removed to provide access to the space of the inner opening; two mounting arms for securing the cable reel, said mounting arms being spaced apart through the inner hole and substantially equidistant from the tailgate; a bridge with a cable guide to facilitate the removal of the cable from the cable drum; at least one cable support arm extends from the side of the undercarriage; a plurality of cable guides arranged on at least one cable support arm to facilitate steering the cable; and a hydraulic actuator system for positioning at least one cable support arm and securing the cable drum to the mounting arms; while in use, the cable drum is mounted on mounting arms in the space of the inner opening, and the cable is guided through the cable guide and cable guides into the ditch.

From the Polish patent specification PL134585 B1 a transport device is known, especially for transporting materials on drums and for unwinding and winding them, equipped with a chassis frame with a closed structure with extendible supports, mounted on a wheel set and equipped with a drum drive mechanism, having a drum carrier unit set in motion with a hydraulic cylinder. The device is characterized in that the drum support assembly has a tiltable frame supported pivotally on the chassis frame, the frame being preferably H-shaped and offset to the back relative to the chassis frame. Preferably, carriages for moving the load are arranged in the frame, provided with running elements, preferably rolling. Preferably, a drive mechanism of the carriages is arranged in the front part of the tilting frame.

The frame, on the other hand, is mounted on bases connected to a hydraulic cylinder on one side and brackets on the other. Preferably, the ends of the tilting frame have a telescopically extendible element. Moreover, in a preferred embodiment of the disclosure, a roller is arranged on its upper surface in the front part of the chassis frame, with a length corresponding to the width of the chassis frame, which constitutes the bearing element of the chassis frame and serves to drive the drum. Preferably, the chassis frame is provided with a floor and there is a box on the frame. In preferred embodiments, openings are provided in the side walls of the carriages in which fasteners are provided for supporting the drums.

Other devices for supporting and operating a cable drum are known e.g. from US 4 588 142 A**,** GB 2 265 355 A and US 5 895 197 A**.**

The aim of the invention was to provide a device for improving the efficiency of building fibre-optic infrastructure. Another aim of the invention was to create a multi-purpose mobile device constituting a complete device for the assembly of fibre-optic infrastructure.

The essence of the invention is a device for supporting and operating a cable drum, equipped with a rectangular frame and a locking-release mechanism, characterised in that a sliding carriage equipped with tensioning is mounted on the main frame, wherein said sliding carriage is in the shape of a rectangle, open on one side, which is the front part of a sliding carriage, in addition, the main frame is equipped with a locking-release mechanism mounted on both sides of the main frame on its longitudinal sides; in the centre of the front transverse part of the main frame there is a winch connected to the drive; in the longitudinal part, the main frame consists of two parallel to each other semi-closed channels mounted upwards with the open part of the channels, and in the centre of each semi-closed channel of the longitudinal part of the main frame there are support rollers, which are attached to a sliding carriage mounted on the main frame; a triangular boom with swivel arms is mounted in the front, open part of the sliding carriage by means of bolts; in the upper part of each of the swivel arms of the triangular boom, clamping yokes are mounted, equipped with quadruple bearing sleeves and mounting the support bar, secured with threaded cranks constituting the closing mechanism of the clamping yokes; the winch is connected via a cable successively to the first tensioning roller located in the rear transverse part of the main frame, the second tensioning roller located in the rear part of the sliding carriage and to the third tensioning roller located on the triangular boom.

Preferably, the bar comprises two sliding discs.

Preferably, the device comprises a securing fixture of the triangular boom in the form of braces.

Preferably, the device comprises a sliding carriage safety device, which is a bolt grip made of a sleeve fixed on the main frame and a sleeve in the sliding carriage.

Preferably, the drive is selected from the group consisting of a mechanical, electric, hydraulic or pneumatic drive.

Preferably, the drive is equipped with a controller for wired or wireless control.

Another subject of the invention is a service trailer, especially for transporting materials on drums, equipped with a chassis frame mounted on a wheelset and provided with a floor plate, a front wall, two side walls and a ceiling plate, characterised in that a device according to the invention is mounted in its rear part, while in the front part there is a frame for fastening the compressor and an air dryer connected to it, from which a compressed air system leads towards the rear of the trailer and ends with a valve and a connector; side door is located in the right side wall of the trailer at the height of the frame with the compressor and air dryer installed; in the front wall there is a hot air outlet and a fuel inlet for refuelling the compressor, while in the left side wall there is an air inlet for the screw compressor.

Preferably, the frame ends at the top with a shelf for mounting accessories.

Preferably, the compressed air system in the section from the air dryer to the device is stretched along the inner side of the right side of the trailer, and at the height of the device there is a vertical section of the compressed air system leading to the inner side of the trailer ceiling plate, from where the compressed air system is routed to the edge of the ceiling plate of the rear of the trailer.

Preferably, the trailer according to the invention contains supports.

Preferably, the trailer according to the invention is provided with a closing part in the form of a tailgate or a rear door.

The invention provides the following advantages; it:
- Accelerates the pace of work;
- Enables easier loading, transport and assembly;
- Two persons are sufficient to load, transport, handle and install the infrastructure;
- Enables a reduction of loading time by about 15-20 minutes compared to the existing solutions;
- Eliminates the need to unload and set up the equipment at the work site, because it is enough to properly position the trailer according to the invention in relation to the work site;
- The smaller dimensions of the trailer according to the invention facilitate its parking - the required space, which is necessary for parking / positioning the trailer during assembly operations, is much smaller than the hitherto required - approx. 50% less space;
- During installation the trailer is self-powered and can stand alone in place. And the vehicle that transported the trailer can be unhitched/disconnected;
- During the installation process, appropriately designed modules/segments allow the job to be completed faster and more efficiently;
- Due to the absence of the need to unload, there is no equipment, no accessories and no materials to be deployed. When moving the set to the next installation site to continue the work, there is no reloading and securing;
- It provides increased savings in the Logistics aspect, which in turn translates into greater efficiency and effectiveness of building fibre-optic infrastructure - efficiency increase in the range of 30-40%.

The invention is shown in embodiments in figures, where fig. 1 shows the device according to the invention in the rest position in isometric view; fig. 2 shows the device according to the invention in the rest position in a side view showing the tensioning device of the sliding carriage; fig. 3 shows the device according to the invention in the rest position in side view, detailing the support rollers of the sliding carriage; fig. 4 shows the device according to the invention in the rest position in top view; fig. 5 shows the device according to the invention in the extended position in isometric view; fig. 6 shows the device according to the invention in the extended position in a side view; fig. 7 shows the device according to the invention in the rest position mounted on the trailer; fig. 8 shows the device according to the invention in the extended state mounted on the trailer; fig. 9 shows the trailer according to the invention with a loaded cable drum in isometric view, in particular showing the rear and the right side of the trailer; fig. 10 shows the front view of the trailer according to the invention; fig. 11 shows the trailer according to the invention in the left side view; fig. 12 shows the preparation of a boom for loading a drum onto the trailer according to the invention, incorporating the device according to the invention; fig. 13 shows the loading of the drum on the trailer according to the invention incorporating the device according to the invention; fig. 14 shows a drum loaded on a trailer according to the invention incorporating the device according to the invention; fig. 15 shows the construction of a locking-release mechanism in the device according to the invention.

### Example 1.

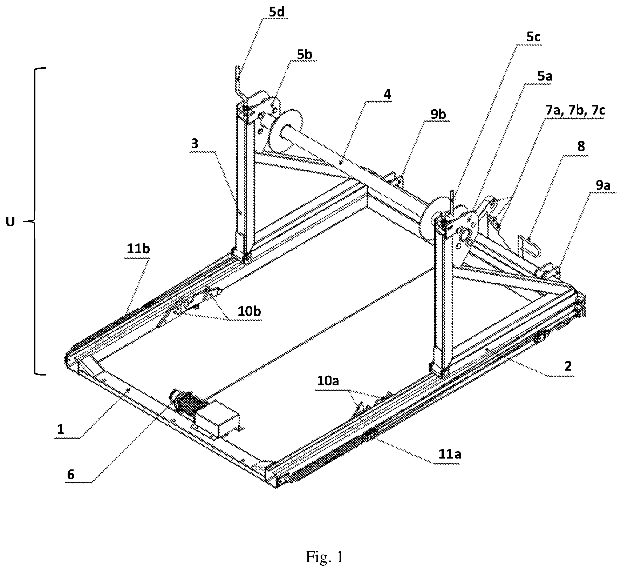

The device **U** according to the invention is a device provided with a steel main frame **1** for supporting and operating a cable drum used for assembling fibre-optic infrastructure. The design of the **U** device according to the invention is shown in fig. 1-6, where **1** stands for the main frame, **2** stands for the sliding carriage, **3** stands for the triangular boom, **4** stands for the support bar, **5a** and **5b** stand for clamping yokes, **5c** and **5d** stand for threaded cranks, **6** stands for a winch with a drive, **7a** stands for the first tensioning rollers, **7b** stands for the second tensioning rollers, **7c** stands for the third tensioning rollers, **8** stands for fixture of the sliding carriage, **9a** and **9b** stand for securing fixture of the triangular boom; **10a** and **10b** stand for a locking-release mechanism; **11a** and **11b** stand for the tensioning of the sliding carriage, **12** stands for the support rollers of the sliding carriage, **22** stands for an additional reinforcing plate, **23** stands for an additional reinforcing beam.

As shown in fig. 1 in this non-limiting embodiment, the device **U** according to the invention is a separate module ready to be mounted in vehicles or trailers known from the prior art or in the trailer **P** according to the invention.

A sliding carriage **2** equipped with tensioning **11a** and **11b** is mounted on the main frame **1,** wherein said sliding carriage **2** is rectangular in shape, open on one side constituting the front part of the sliding carriage **2.** Moreover, the main frame **1** is equipped with a locking-release mechanism **10a, 10b** mounted on both sides of the main frame **1** on its longitudinal sides. Whereas, the tensioning mechanism **11a** and **11b** interacts/cooperates with the locking-release mechanism **10a** and **10b** mounted on the main frame **1.**

In the centre of the front transverse part of the main frame **1** a winch **6** is mounted, connected to the drive. The sliding carriage **2** is equipped with a fixture **8** securing the sliding carriage **2** in the form of a bolt grip placed in a sleeve fixed in the main frame **1** and a sleeve in the sliding carriage **2.**

The said securing fixture **8** of the sliding carriage ensures that the carriage **2** with a triangular boom **3** is secured against horizontal movement during transport.

Moreover, on the main frame **1,** through the carriage **2,** a triangular boom 3 equipped with a securing fixture of the triangular boom in the form of brackets **9a** and **9b,** which protect it against vertical movement during the transport of the **U** device. Whereas in this non-limiting embodiment the sliding carriage **2** and the triangular boom **3** located on the main frame **1** are moved by means of an electrically powered drive of winch **6** via a steel cable and tensioning rollers **7a, 7b** and **7c.** However, within the meaning of the invention, other types of drives (e.g. mechanical, hydraulic, pneumatic) can also be used.

The device **U** according to the invention is powered by an external power source, which may be, for example, an accumulator of a vehicle towing a trailer on which the device is mounted. In this non-limiting embodiment, an independent installation is provided, powered from the vehicle accumulator (Cars) up to the auxiliary socket mounted on the hook of the towing vehicle. The trailer is connected by a plug to the socket of the vehicle towing the trailer. The installed system on the trailer supplies power to the winch **6** with the drive.

Whereas, in this embodiment, the drive is fixed to the centre of the front and transverse parts of the main frame **1** and is controlled by a wired remote control, while wireless remote controls can also be used. However, in the case of wired control, a contactor and the extend / retract buttons are used. In the case of wireless control, the control is carried out by means of a transmitter and a receiver, where the extend / retract command is given by radio waves.

In this embodiment, the two-button wired remote control has the following buttons:
a) The extend / tilt button;
b) The retract button.

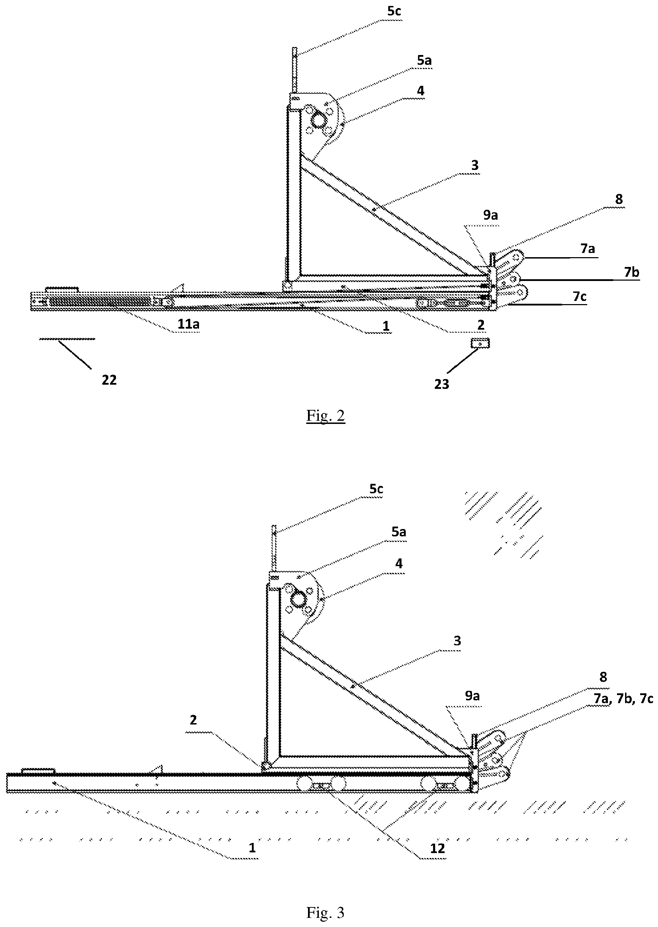

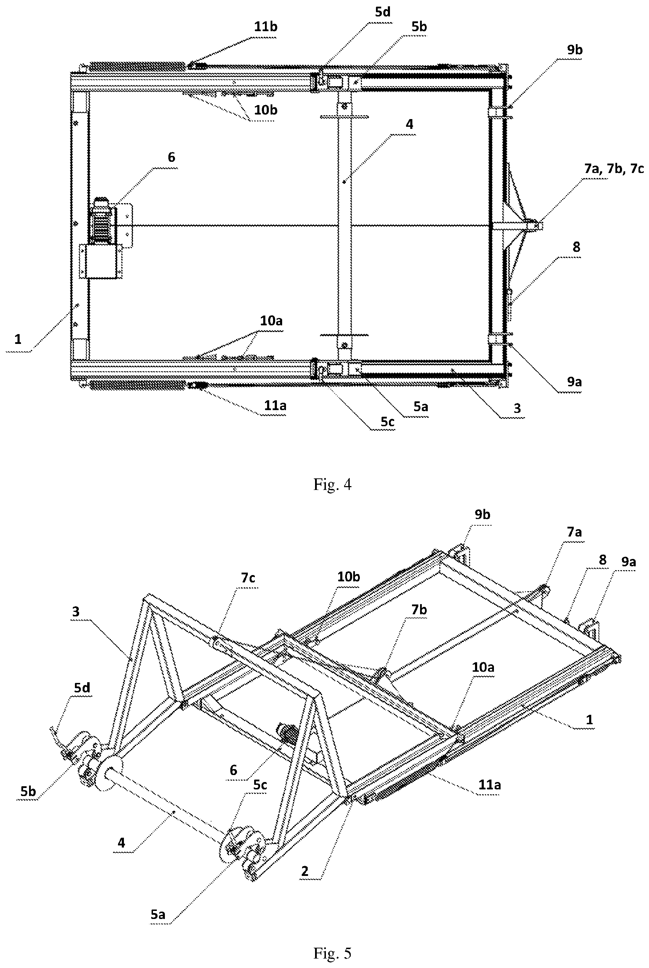

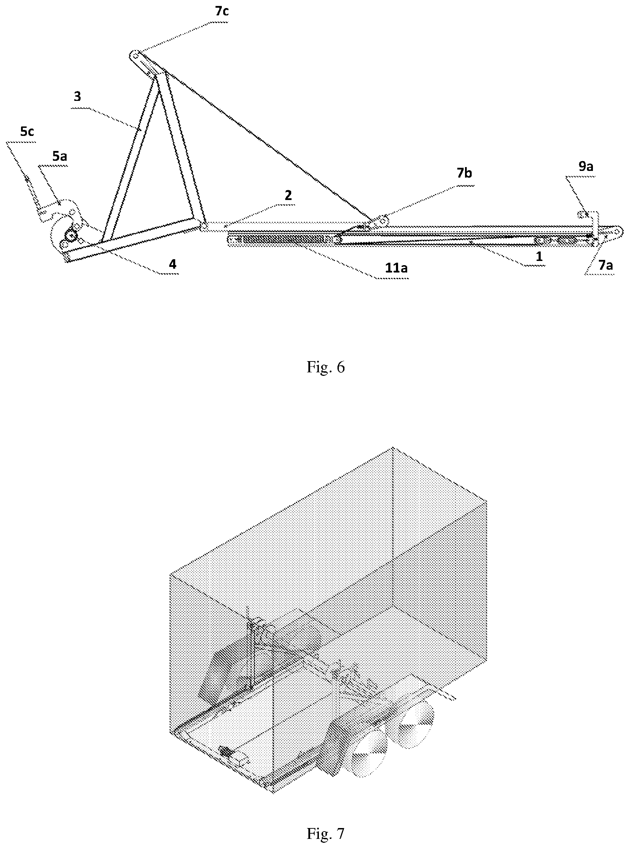

As indicated in fig. 1 and 3, in the longitudinal part, the main frame **1** consists of two semi-closed channels parallel to each other, mounted with the open part of the channel facing upwards, and in the middle of each semi-closed channel of the longitudinal part of the main frame **1** there are support rollers **12** (Fig. 3) which, through an opening (or e.g. a cut) in the aforementioned semi-closed channel, were attached (with a distance allowing their movement) to a sliding carriage **2** mounted on the main frame **1.** A suitable spacing between the first and second sets of support rollers **12** with respect to the sliding carriage **2** allows the sliding carriage **2** to slide in the main frame **1.** This allows for a suitable extension beyond the front of the range of the main frame **1** (as shown in fig. 5 and 6) and provides additional freedom to position the Cable Drum **X** prior to loading.

As indicated in fig. 2, in this embodiment the device **U** is equipped with an additional reinforcing plate **22** and an additional reinforcing beam **23.** The additional reinforcing plate **22** is intended to be mounted under the trailer floor, on which the **U**-device is mounted, and it fastens the main frame **1** and the winch **6** with the trailer support frame through. The additional reinforcing beam **23** is also intended to be mounted under the floor of the trailer on which the **U** device is mounted, and the said beam **23** fastens the main frame **1** with the trailer supporting frame through.

In the front, open part of the sliding carriage **2,** a triangular boom **3** with tilting arms is mounted by means of bolts. As a result, the arms of the triangular boom **3** are able to tilt to load the Cable Drum **X.**

In the upper part of each of the tilting arms of the triangular boom **3,** clamping yokes **5a, 5b** are mounted, equipped with quadruple bearing sleeves and a support bar **4** fitted with two sliding plates and secured with threaded cranks **5c, 5d** constituting the closing mechanism of the clamping yokes **5a, 5b.**

The winch **6** is connected via a cable successively to the first tensioning roller **7a** located in the rear part of the transverse main frame **1,** the second tensioning roller **7b** located in the rear part of the sliding carriage **2** and to the third tensioning roller **7c** mounted on the triangular boom **3.**

The device **U** according to the invention combines the following functions:
- Loading and unloading of cable / conduit / pipe / wire drum with a lifting device.
- Quick securing of the cable / conduit / pipe / wire drum during transport.
- Possibility to use the drum with cables / conduits / pipes / wires during line works without the need to unlock, unload the drum from a vehicle or trailer.

### Example 2.

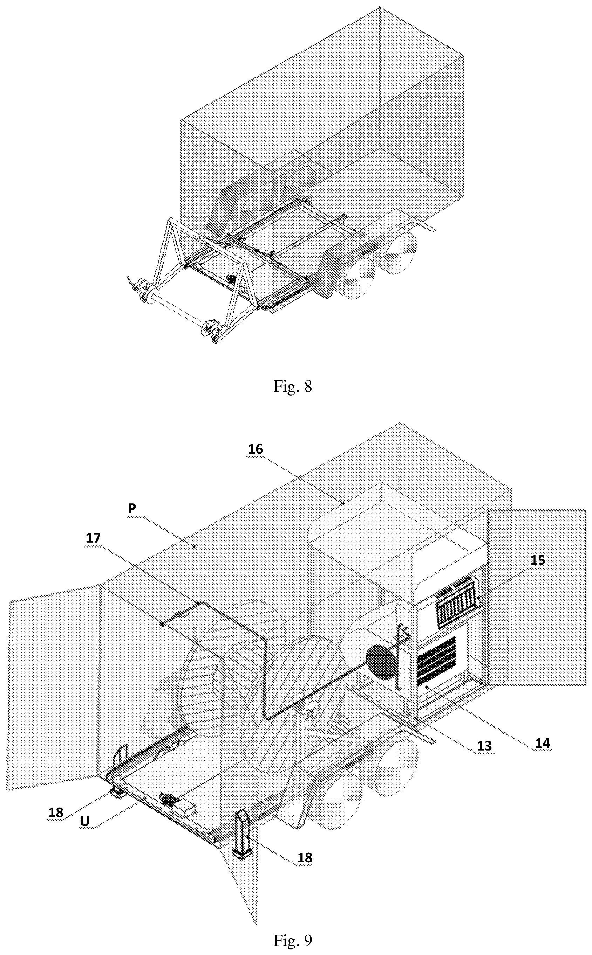

The service trailer **P** according to the invention is intended in particular for transporting materials on cable drums and contains the device **U** according to the invention, which in an unloaded variant at rest is shown in Fig. 7. Whereas Fig. 8 the device **U** according to the invention is shown in a trailer **P** according to the invention during extension. Trailer **P** is equipped with a chassis frame mounted on a wheelset and with a floor plate, a front wall, two side walls and a ceiling plate. Moreover, in this embodiment, the trailer **P** is provided with a closure in the form of a rear double door, but another closure, e.g. a tailgate, may be used.

The device **U** according to the invention is located in the rear part. On the other hand, in the front part of the trailer **P** there is a frame **13** for mounting a compressor **14** and an air dryer **15** connected to it.

Additionally, using the remaining space in the trailer **P,** a shelf for mounting accessories **16** was designed (for various types of accessories that may be useful during line work). In this non-limiting embodiment, the frame **13** ends at the top with a shelf for mounting accessories **16,** for the safe storage of small accessories or additional devices.

In addition, the trailer **P** is provided with supports **18.** Extending the trailer supports **8** is particularly recommended before loading and unloading the drum **X.** While using the trailer **P,** it is not required to extend the trailer supports **8.**

As indicated in fig. 9, from the air dryer **15** a compressed air system **17** runs towards the rear of the trailer **P** and ends with a valve and a nipple. Whereby, said compressed air system **17** in the section from the air dryer **15** to the device **U** is extended along the inner surface of the right side of the trailer **P.** At the height of the device **U,** the system **17** turns vertically upwards towards the inner side of the ceiling plate of the trailer **P,** from where the compressed air system **17** is led up to the edge of the ceiling plate of the rear of the trailer **P.**

Moreover, in the right side wall of the trailer **P,** at the height of the frame **13** with the mounted compressor **14** and air dryer **15,** there are side doors that allow free access to the compressor **14** and the air dryer **15** from the outside.

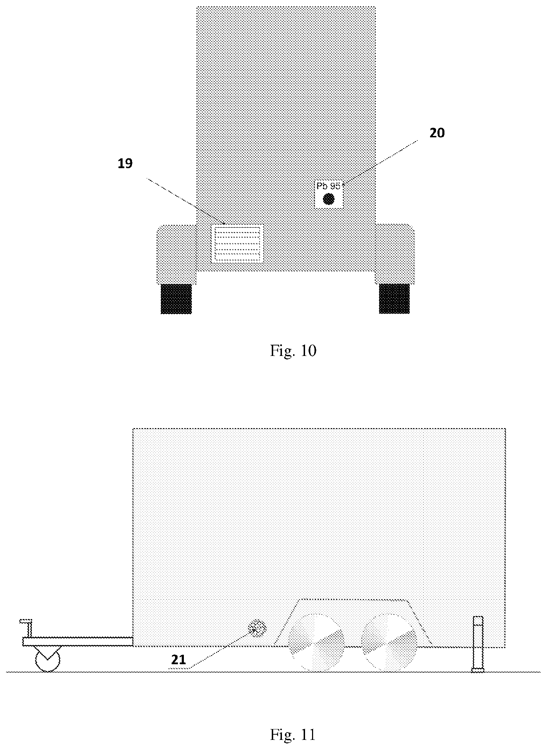

As indicated in fig. 10, in the front wall of the trailer **P** there is a warm air outlet **19** for cooling the compressor and a fuel filler **20** for refuelling the compressor. Whereas, as indicated in Fig. 11, in the left side wall of the trailer **P,** an air inlet **21** for the screw compressor **14** is installed.

The compressor **14** and the air dryer **15** are devices known from the prior art. When using the compressor **14** in the trailer **P,** check the fuel level in the compressor **14,** and if necessary, refuel through the fuel filler neck for e.g. the compressor **20** located in the trailer **P.** The compressor **14** is started by a starter in accordance with the compressor **14** manufacturer's instructions and should remain started for the duration of the line work. By opening the valve located at the compressor **14,** the compressed air system **17** is supplied, which is terminated with a valve and a connector to which an external blower is connected. Whereas, the said external blower machine is connected to the system **17** via an external, flexible, high-pressure hose. By opening the valve at the compressed air connection **17** the blower is ready for operation and can start working.

Independent and free rotation of the loaded and secured cable drum **X** around its axis causes the cables / conduits / pipes / wires to unwind or wind. This allows immediate access and use when performing line work. After completing the work, it is enough to turn off the compressor **14** and close the valves, i.e. the first valve at the compressor **14** and the second at the compressed air system **17** terminated with a valve and a connector. Then, the external blower, connected with an external, flexible, high-pressure hose to the compressed air system coupling **17** is disconnected (i.e. detached). In the last stage, the rear door wings and the side door of the trailer **P** are closed, thus securing everything for transport.

The service trailer **P** according to the invention enables the integration of many service devices, which, when integrated in a closed trailer, form a compact, mobile and specialised set for line work, e.g. for assembly, installation, laying, unfolding, inserting, blowing, pulling all kinds of cables, conduits, pipes, wires, etc.

At the same time, in the trailer **P,** all devices, including the device **U** according to the invention, are installed in the working sequence, so there is no need to remove the devices in order to prepare them for the commencement of work. This way, the team is operational within minutes of arriving at the job site. By skipping unpacking / packing of the equipment necessary for work, the efficiency of the team significantly increases, especially when it carries out line work in many locations in one day.

The designed bodywork enables adaptation of the trailer **P** according to the invention to a wide range of applications, enables quick access to individual devices and their efficient service.

### Example 3.

### The mechanism of operation of the device U according to the invention mounted on a trailer

### Stage 1: preparing the device U for loading (or unloading) of Drum X

The device **U** according to the invention, when loaded on the trailer **P** according to the invention, in the starting condition (i.e. free from loading) is blocked for transport and secured against vertical movement (by means of the triangular boom securing fixtures **9a** and **9b**) and horizontal movement (by means of the securing fixture **8** of the sliding carriage).

Before starting the operation of the **U** device, release the securing fixture **8** of the sliding carriage by pulling the bolt grip from the sleeve fixed in the main frame **1** and in the sliding carriage **2.** The securing fixture **8** is manually released by the Operator.

On the other hand, the securing fixtures of the triangular boom **9a** and **9b** are automatically released. After releasing the securing fixture **8** (used for transport), it is possible to extend the sliding carriage **2** and the triangular boom **3** in the device **U** according to the invention. In this embodiment, the travel of the sliding carriage **2** is controlled by a wired remote control.

The travel of the sliding carriage **2** in the main frame **1** enables the appropriate spacing of sets of supporting rollers **12** in the main frame **1** in relation to the sliding carriage **2.** The pinning of the triangular boom **3** mounted in the front open part of the sliding carriage **2** by means of bolts allows the arms of the triangular boom **3** to tilt out for loading the drum **X.**

When the sliding carriage **2** is extended together with the triangular boom **3,** the motorized winch **6** loosens the steel cable and the steel cable through the first, second and third tensioning rollers **7a, 7b** and **7c** successively, thanks to the tensioning features of the sliding carriage **11a** and **11b** (in the form of springs that begin to pull), cause the sliding carriage **2** to slide out together with the triangular boom **3,** until the point of contact with the locking-release mechanism **10a** and **10b** is reached.

The locking-release mechanism **10a** and **10b,** when the sliding carriage **2** extends, first locks the sliding carriage **2** and enables the tilting out the triangular boom **3.** Note: in the first phase, the operator manually tilts the triangular boom **3** while loosening the steel cable from the winch **6,** but only until the triangular boom **3** tilts (i.e. approx. 20 cm) so that the triangular boom **3** can continue to tilt automatically / automatically (gravity) .

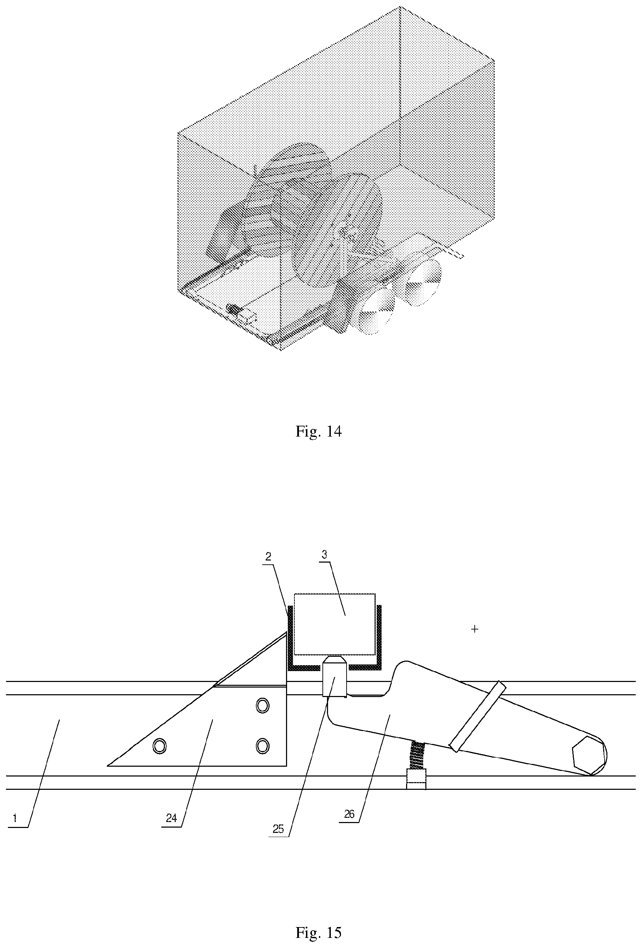

The locking-release mechanism **10a** and **10b** during the **retraction** procedure of the sliding carriage **2,** until the triangular boom **3** returns (i.e. it returns to its initial position in the carriage **2)** automatically locks the sliding carriage **2.** This allows free return movement of the triangular boom **3.** As soon as the triangular boom **3** comes into contact with the sliding carriage **2,** the locking device is automatically released (by means of special pawls), allowing the sliding back into the return position by the sliding carriage **2.** The locking-release mechanism **10a, 10b** is shown in Fig. 15, wherein **24** is the triangular locking element, **25** is the pin and **26** is the release part.

In this non-limiting embodiment, the locking-release mechanism **10a, 10b** applied consists of:
A) two triangular parts (i.e., locking elements **24);**
B) two ratchet slides which are the release parts **26** with a fixed pin **25** (or, e.g., a rounded pin);
C) two springs pushing out the slide;
D) two guides for ratchet slides.

Two triangular parts **A** were symmetrically mounted on the main frame **1,** and they were mounted in such a way that the upper part of the triangles **A** protrudes above the upper part of the main frame **1,** fulfilling the function of a lock of the rear transverse structure of the sliding carriage **2** (so the sliding carriage **2** moves only between the starting position and the lock of the triangles described above **A).**

Two guides for the ratchet slides **D** have been symmetrically mounted to the main Frame **1,** so that the ratchet slides **B** could freely move up and down through the oncoming and exiting sliding carriage **2.** The guides **D** also fulfil the function of limiting the movement of the moving slides **B** to the necessary extent, and in particular limiting their upper position.

In order for the ratchet slides **B** to automatically return / position themselves in the upper part of the guides, springs were mounted symmetrically on the main frame **1,** pushing out the **C** slides, but allowing the pushing (downward movement) of the ratchet slides **B** through the oncoming sliding carriage **2.**

Two ratchet slides **B** have been symmetrically mounted to the main frame **1,** so that they can move freely up and down, the ejection spring **C** provides upward movement, and the rear transverse part of the sliding carriage **2,** by riding onto the ratchet slides, provides the downward movement.

An important element are the pins **25** (or e.g. rounded mandrels) which, through the penetrations / holes (with a diameter greater than the pins / mandrels) on the edges of the rear - transverse - lower part of the sliding carriage **2** structure, enter the penetration / hole in the initial phase of tilting of the triangular boom**3,** locking at the same time the return movement of the sliding carriage **2.**

Thus, in the swing phase of the triangular Boom **3,** both the two triangular parts **A** and the pins **25** / rounded mandrels of the ratchet slides **B** prevent the sliding carriage **2** from moving forward and backward, thus blocking the sliding carriage **2.**

Only in the return phase of the triangular boom **3,** i.e. until it is laid in the sliding carriage **2,** while simultaneously pressing the pins **25** / mandrels of the ratchet slides **B,** it is possible to move backwards and return the sliding carriage **2** to its starting point.

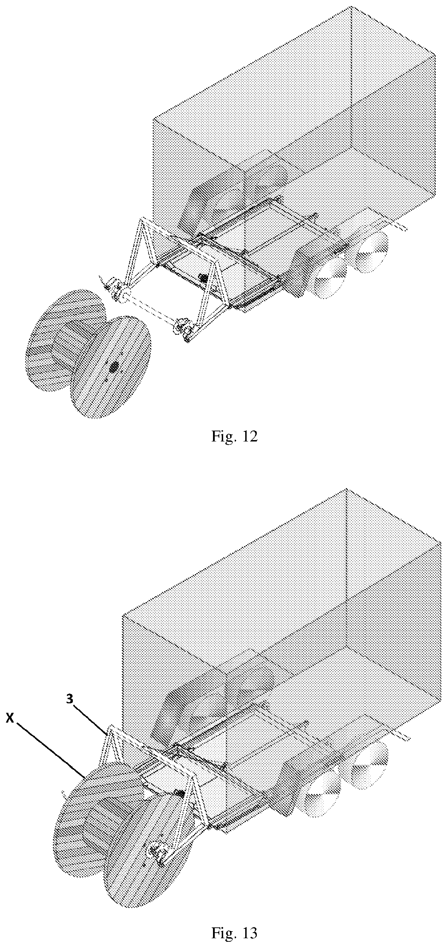

The ratchet slides **B** are pushed up again waiting for the sliding carriage **2**
After the sliding carriage **2** has stopped at the point of contact with the locking-and-release mechanism **10a** and **10b** (i.e. when the maximum extension point has been reached), it is the moment of locking the carriage. Next, the triangular boom **3** is unlocked, which, by further loosening the cable from the winch **6** with the drive, allows the arms of the triangular boom **3** to tilt until the necessary height in the axis of the drum **X** is reached, as shown in Fig. 12.

After the arms of the triangular boom **3** have tilted to the point specified by the operator (e.g. the height of the drum axis), the operator manually releases the clamping yokes **5a** and **5b** by unscrewing the threaded cranks **5c** and **5d,** respectively. The operator then opens the clamping yokes **5a** and **5b,** which allows the support bar **4** to be pulled out. When the support bar **4** is pulled out, an open space is reached between the arms of the triangular boom **3,** which allows the drum **X** to be rolled in or the trailer according to the invention to be set up/moved/parked with the device **U** according to the invention in such a way that the axis of the drum **X** is in the closing axis of the clamping yokes **5a** and **5b.**

### Stage 2: Fixing and securing the drum X in the device U according to the invention

In the axis of the drum **X** there are holes on both its left and right sides (through holes), into the holes in the axis of the drum **X** the operator places the support bar **4,** so that the ends of the support bar **4** are in place of the bearing sleeves located on both sides in the clamping yokes **5a** and **5b.** After the support bar **4** has been returned to the clamping yokes **5a** and **5b,** the clamping yokes **5a** and **5b** are closed and secured with threaded cranks **5c** and **5d.** Additionally, on the support bar **4** there are two disks moved to the left and right sides of the drum **X,** which, after its centring, are attached to the support bar **4,** and protect the drum **X** from shifting during loading, i.e. retracting by the device **U** according to the invention, and during transport. This loading step is shown schematically in Fig. 13.

### Stage 3: Pulling in the triangular boom 3 and inserting the sliding carriage 2 in the trailer interior

After placing and securing the drum **X** on the support bar **4** and placing the support bar **4** in the clamping yokes **5a** and **5b,** the arms of the triangular boom **3** are pulled in together with the drum **X** placed on the support bar **4,** the winch **6** with a drive pulls the steel cable in and through the tensioning rollers **7a** , **7b** and **7c,** the triangular boom **3** is pulled in until the triangular boom **3** is laid and rests in the sliding carriage **2,** which stands locked in its original point of contact with the locking-release mechanism **10a** and **10b.**

After the triangular boom **3** is laid and rested in the sliding carriage **2** at the point of contact with the locking-release mechanism **10a** and **10b** (i.e. after folding and fully resting, the carriage **2** is unlocked). The triangular boom **3** is blocked successively, while the sliding carriage **2** is unlocked at the same time. By continuing to pull in the line through the motorized winch **6,** the sliding carriage **2** is retracted while tensioning the tensions of the sliding carriage **11a** and **11b** (the springs begin to stretch) until the sliding carriage **2** reaches the return starting point.

### Stage 4: Completion of work and securing of the device U according to the invention:

The sliding carriage **2** with the triangular boom **3** reaching the starting point are automatically locked again and secured against vertical movement during transport by means of securing fixtures of the triangular boom **9a** and **9b.** Additionally, the sliding carriage **2** together with the triangular boom **3** is secured against horizontal movement during transport by means of the securing fixture of the sliding carriage **8.** Thus, the device **U** according to the invention reaches the occupied start condition with loading.

The device **U** with the drum **X** is secured and ready for transport and at the same time ready for line work (fig. 14).

Whereas, the trailer according to the invention containing the device **U** according to the invention with a loaded cable drum **X** is ready for use and does not require any additional operations to be performed before line work is started.

This is due to the innovative fastening system, including the use of clamping yokes **5a** and **5b,** which are equipped with quadruple bearing sleeves in each of the arms of the triangular boom **3,** which enables direct, independent and free rotation of the placed support bar **4,** and as a result, allows the cable drum **X** to rotate around its axis (causing cables / conduits / pipes / wires to unwind or wind).

Whereas, when loading / unloading the cable drum **X,** it must be noted that the trailer **P** should always be connected to an additional independent power supply, e.g. directly to the battery of the vehicle towing the trailer. It is recommended that the vehicle always have the engine running when loading and unloading the drum **X.**

However, the said connection to an independent power supply and the engine running in the vehicle is required only for the time of loading and unloading the drum **X.** During the use of the trailer **P,** power is not required.

The rear door wings and the side doors of trailer **P** must always be open and secured during loading, use and unloading of drum **X.**

The above-mentioned embodiments and drawings are only examples of embodiments of the device **U** and the trailer **P** according to the invention, and do not limit the invention. The embodiments of the invention presented in the exemplary embodiments constitute an illustrative basic model of the device **U** and the trailer **P** equipped with wire control, but an integral feature of the invention is the possibility of retrofitting them, e.g. with the following functions, such as:
- full automation;
- introduction of wireless control;
- changeable or cooperating power sources and types of drives (electric, hydraulic or pneumatic);

However, the above changes do not require the reconstruction or redesign of the **U** device, but only the installation of additional parts.

## Claims

1. A device for supporting and operating a cable drum, equipped with a rectangular main frame (1) and a locking-release mechanism, **characterised in that** a sliding carriage (2) equipped with tensioning (11a and 11b) is mounted on the main frame (1), wherein said sliding carriage (2) is in the shape of a rectangle, open on one side, which is the front part of a sliding carriage (2), in addition, the main frame (1) is equipped with a locking-release mechanism (10a, 10b) mounted on both sides of the main frame (1) on its longitudinal sides; in the centre of the front transverse part of the main frame (1) there is a winch (6) connected to a drive; in the longitudinal part, the main frame (1) consists of two parallel to each other semi-closed channels mounted upwards with the open part of the channel, and in the centre of each semi-closed channel of the longitudinal part of the main frame (1) there are support rollers (12), which are attached to the sliding carriage (2) mounted on the main frame (1); a triangular boom (3) with swivel arms is mounted in the front, open part of the sliding carriage (2) by means of bolts; in the upper part of each of the swivel arms of the triangular boom (3), clamping yokes (5a, 5b) are mounted, equipped with quadruple bearing sleeves and mounting a support bar (4) secured with threaded cranks (5c, 5d) constituting the closing mechanism of the clamping yokes (5a, 5b); the winch (6) is connected via a cable successively to a first tensioning roller (7a) located in the rear transverse part of the main frame (1), a second tensioning roller (7b) located in the rear part of the sliding carriage (2) and to a third tensioning roller (7c) located on the triangular boom (3).

2. The device according to claim 1, **characterised in that** the bar (4) comprises two sliding discs.

3. The device according to claim 1 or 2, **characterised in that** it comprises a triangular boom securing fixture (9a, 9b) in the form of braces.

4. The device according to any of the preceding claims from 1 to 3, **characterised in that** it comprises a securing fixture (8) of the sliding carriage (2), which is a bolt grip in the sleeve mounted on the main frame (1) and the sleeve in the sliding carriage (2).

5. The device according to any of the preceding claims, 1 to 4, **characterised in that** the drive is selected from the group of mechanical, electric, hydraulic or pneumatic drives.

6. The device according to any of the preceding claims from 1 to 5, **characterised in that** the drive is equipped with a controller for wired or wireless control.

7. A service trailer, especially for transporting materials on drums, equipped with a chassis frame mounted on a wheelset and provided with a floor plate, a front wall, two side walls and a ceiling plate, **characterised in that** a device (U)according to any from the previous claims from 1 to 6 is mounted in its rear part, while in the front part there is a frame (13) for fastening the compressor (14) and an air dryer (15) connected to it, from which the compressed air system (17) leads towards the rear of the trailer (P) and ends with a valve and a connector; side door is located in the right side wall of the trailer (P) at the height of the frame (13) with the compressor (14) and air dryer (15) installed; in the front wall there is a hot air outlet (19) and a fuel inlet (20) for refuelling the compressor (14), while in the left side wall there is an air inlet for the screw compressor (14).

8. The trailer according to claim 7, **characterised in that** the frame (13) is terminated at the top by a shelf for mounting accessories (16).

9. The trailer according to claim 7 or 8, **characterised in that** the compressed air system (17) in the section from the air dryer (15) to the device (U) is stretched along the inner side of the right side of the trailer (P), and at the height of the device (U) there is a vertical section of the compressed air system (17), leading to the inside of the trailer (P) ceiling plate, from where the compressed air system (17) is routed to the edge of the ceiling plate of the rear of the trailer (P).

10. The trailer according to any one of the preceding claims from 7 to 9, **characterised in that** it comprises supports (18).

11. The trailer according to any one of the preceding claims from 7 to 10, **characterised in that** it is provided with a closure in the form of a tailgate or rear door.

## Patentansprüche

1. Vorrichtung zum Tragen und Betreiben einer Kabeltrommel, die mit einem rechteckigen Hauptrahmen (1) und einem Verriegelungs-Freigabemechanismus ausgestattet ist, **dadurch gekennzeichnet, dass** ein Gleitschlitten (2), der mit Spannvorrichtungen (11a und 11b) ausgestattet ist, an dem Hauptrahmen (1) angebracht ist, wobei der Schiebeschlitten (2) die Form eines einseitig offenen Rechtecks hat, das den vorderen Teil eines Schiebeschlittens (2) bildet, außerdem ist der Hauptrahmen (1) mit einem Verriegelungs-Entriegelungsmechanismus (10a, 10b) ausgestattet, der auf beiden Seiten des Hauptrahmens (1) an dessen Längsseiten angebracht ist; in der Mitte des vorderen Querteils des Hauptrahmens (1) befindet sich eine Winde (6), die mit einem Antrieb verbunden ist; im Längsteil besteht der Hauptrahmen (1) aus zwei parallel zueinander verlaufenden halbgeschlossenen Kanälen, die mit dem offenen Teil des Kanals nach oben montiert sind, und in der Mitte jedes halbgeschlossenen Kanals des Längsteils des Hauptrahmens (1) befinden sich Stützrollen (12), die an dem auf dem Hauptrahmen (1) montierten Gleitschlitten (2) befestigt sind; ein dreieckiger Ausleger (3) mit Schwenkarmen ist im vorderen, offenen Teil des Gleitwagens (2) mit Hilfe von Bolzen befestigt; im oberen Teil jedes der Schwenkarme des dreieckigen Auslegers (3) sind Spannbügel (5a, 5b) montiert, die mit vierfachen Lagerhülsen versehen sind und eine Stützstange (4) tragen, die mit Gewindekurbeln (5c, 5d) befestigt ist, die den Schließmechanismus der Spannbügel (5a, 5b) bilden; die Winde (6) ist über ein Seil nacheinander mit einer ersten Spannrolle (7a), die sich im hinteren Querteil des Hauptrahmens (1) befindet, einer zweiten Spannrolle (7b), die sich im hinteren Teil des Gleitwagens (2) befindet, und mit einer dritten Spannrolle (7c), die sich auf dem dreieckigen Ausleger (3) befindet, verbunden.

2. Vorrichtung nach Anspruch 1, **dadurch gekennzeichnet, dass** die Stange (4) zwei Gleitscheiben umfasst.

3. Vorrichtung nach Anspruch 1 oder 2, **dadurch gekennzeichnet, dass** sie eine dreieckige Auslegerbefestigung (9a, 9b) in Form von Streben umfasst.

4. Vorrichtung nach einem der vorhergehenden Ansprüche 1 bis 3, **dadurch gekennzeichnet, dass** sie eine Befestigungsvorrichtung (8) des Schiebeschlittens (2) umfasst, die ein Bolzengriff in der am Hauptrahmen (1) montierten Hülse und der Hülse im Schiebeschlitten (2) ist.

5. Vorrichtung nach einem der vorhergehenden Ansprüche 1 bis 4, **dadurch gekennzeichnet, dass** der Antrieb aus der Gruppe der mechanischen, elektrischen, hydraulischen oder pneumatischen Antriebe ausgewählt ist.

6. Vorrichtung nach einem der vorhergehenden Ansprüche 1 bis 5, **dadurch gekennzeichnet, dass** der Antrieb mit einer Steuerung zur drahtgebundenen oder drahtlosen Steuerung ausgestattet ist.

7. Serviceanhänger, insbesondere für den Transport von Materialien auf Fässern, der mit einem auf einem Radsatz montierten Fahrgestellrahmen ausgestattet ist, der mit einer Bodenplatte, einer Vorderwand, zwei Seitenwänden und einer Deckenplatte versehen ist, **dadurch gekennzeichnet, dass** in seinem hinteren Teil eine Vorrichtung (U) nach einem der vorhergehenden Ansprüche 1 bis 6 montiert ist, während im vorderen Teil ein Rahmen (13) zur Befestigung des Kompressors (14) und eines damit verbundenen Lufttrockners (15) vorhanden ist, von dem aus das Druckluftsystem (17) zum Heck des Anhängers (P) führt und mit einem Ventil und einem Anschlussstück endet; Seitentür in der rechten Seitenwand des Anhängers (P) in Höhe des Rahmens (13), in dem der Kompressor (14) und der Lufttrockner (15) installiert sind; in der Vorderwand befindet sich ein Heißluftauslass (19) und ein Kraftstoffeinlass (20) zum Betanken des Kompressors (14), während in der linken Seitenwand ein Lufteinlass für den Schraubenkompressor (14) vorhanden ist.

8. Serviceanhänger nach Anspruch 7, **dadurch gekennzeichnet, dass** der Rahmen (13) oben mit einer Ablage zur Befestigung von Zubehör (16) abgeschlossen ist.

9. Serviceanhänger nach Anspruch 7 oder 8, **dadurch gekennzeichnet, dass** das Druckluftsystem (17) im Abschnitt vom Lufttrockner (15) bis zum Gerät (U) entlang der Innenseite der rechten Seite des Anhängers (P) verläuft und in Höhe des Geräts (U) ein vertikaler Abschnitt des Druckluftsystems (17) vorhanden ist, der zur Innenseite der Deckenplatte des Anhängers (P) führt, von wo aus das Druckluftsystem (17) zum Rand der Deckenplatte der Rückseite des Anhängers (P) geführt wird.

10. Serviceanhänger nach einem der vorhergehenden Ansprüche 7 bis 9, **dadurch gekennzeichnet, dass** er Stützen (18) aufweist.

11. Serviceanhänger nach einem der vorhergehenden Ansprüche 7 bis 10, **dadurch gekennzeichnet, dass** er mit einem Verschluss in Form einer Heckklappe oder Hecktür versehen ist.

## Revendications

1. Dispositif pour supporter et actionner un tambour de câble, équipé d'un cadre principal (1) rectangulaire et d'un mécanisme de verrouillage/déverrouillage, **caractérisé par le fait qu'**un chariot coulissant (2) équipé de tendeurs (11a et 11b) est monté sur le cadre principal (1), dans lequel ledit chariot coulissant (2) a la forme d'un rectangle ouvert sur un côté, qui est la partie avant d'un chariot coulissant (2), en outre, le cadre principal (1) est équipé d'un mécanisme de verrouillage et de déverrouillage (10a, 10b) monté sur les deux côtés du cadre principal (1) sur ses côtés longitudinaux; au centre de la partie transversale avant du châssis principal (1) se trouve un treuil (6) relié à un entraînement ; dans la partie longitudinale, le châssis principal (1) est constitué de deux canaux semi-fermés parallèles l'un à l'autre, montés vers le haut avec la partie ouverte du canal, et au centre de chaque canal semi-fermé de la partie longitudinale du châssis principal (1) se trouvent des galets de support (12), qui sont fixés au chariot coulissant (2) monté sur le châssis principal (1); un bras triangulaire (3) avec des bras pivotants est monté dans la partie avant ouverte du chariot coulissant (2) au moyen de boulons; dans la partie supérieure de chacun des bras pivotants de la flèche triangulaire (3) sont montés des étriers de serrage (5a, 5b), équipés de manchons de roulement quadruples et supportant une barre de support (4) fixée à des manivelles filetées (5c, 5d) constituant le mécanisme de fermeture des étriers de serrage (5a, 5b); le treuil (6) est relié par un câble successivement à un premier galet tendeur (7a) situé dans la partie transversale arrière du châssis principal (1), à un deuxième galet tendeur (7b) situé dans la partie arrière du chariot coulissant (2) et à un troisième galet tendeur (7c) situé sur la flèche triangulaire (3).

2. Le dispositif selon la revendication 1, **caractérisé par le fait que** la barre (4) comporte deux disques coulissants.

3. Le dispositif selon la revendication 1 ou 2, **caractérisé en ce qu'**il comprend un dispositif triangulaire (9a, 9b) de fixation de la rampe sous forme d'entretoises.

4. Le dispositif selon l'une quelconque des revendications précédentes de 1 à 3, **caractérisé en ce qu'**il comprend un dispositif de fixation (8) du chariot coulissant (2), qui est une prise de boulon dans le manchon monté sur le cadre principal (1) et le manchon dans le chariot coulissant (2).

5. Le dispositif selon l'une des revendications précédentes, 1 à 4, **caractérisé par le fait que** l'entraînement est choisi dans le groupe des entraînements mécaniques, électriques, hydrauliques ou pneumatiques.

6. Le dispositif selon l'une des revendications précédentes, de 1 à 5, **caractérisé par le fait que** l'entraînement est équipé d'un contrôleur pour une commande câblée ou sans fil.

7. Remorque de service, notamment pour le transport de matériaux sur fûts, équipée d'un châssis monté sur un train de roues et pourvue d'une plaque de plancher, d'une paroi avant, de deux parois latérales et d'une plaque de plafond, **caractérisée en ce qu'**un dispositif (U) selon l'une quelconque des revendications précédentes de 1 à 6 est monté dans sa partie arrière, tandis que dans la partie avant se trouve un cadre (13) pour la fixation du compresseur (14) et d'un sécheur d'air (15) qui lui est relié, à partir duquel le système d'air comprimé (17) se dirige vers l'arrière de la remorque (P) et se termine par une vanne et un connecteur ; La porte latérale est située dans la paroi latérale droite de la remorque (P) à la hauteur du cadre (13) où sont installés le compresseur (14) et le sécheur d'air (15) ; dans la paroi avant se trouvent une sortie d'air chaud (19) et une entrée de carburant (20) pour ravitailler le compresseur (14), tandis que dans la paroi latérale gauche se trouve une entrée d'air pour le compresseur à vis (14).

8. La remorque selon la revendication 7, **caractérisée par le fait que** le cadre (13) est terminé en haut par une étagère pour le montage d'accessoires (16).

9. La remorque selon la revendication 7 ou 8, **caractérisée en ce que** le système d'air comprimé (17) dans la section allant du sécheur d'air (15) au dispositif (U) est tendu le long du côté intérieur du côté droit de la remorque (P), et à la hauteur du dispositif (U) il y a une section verticale du système d'air comprimé (17), menant à l'intérieur de la plaque de plafond de la remorque (P), d'où le système d'air comprimé (17) est acheminé jusqu'au bord de la plaque de plafond de l'arrière de la remorque (P).

10. La remorque selon l'une quelconque des revendications précédentes de 7 à 9, **caractérisée en ce qu'**elle comprend des supports (18).

11. La remorque selon l'une quelconque des revendications précédentes de 7 à 10, **caractérisée en ce qu'**elle est pourvue d'une fermeture sous forme de hayon ou de porte arrière.
